# EUROPÄISCHE PATENTSCHRIFT

(11) **EP 0 450 349 B1**
(45) Veröffentlichungstag und Bekanntmachung des Hinweises auf die Patenterteilung: **16.06.1993**
(21) Anmeldenummer: 91103725.7
(22) Anmeldetag: 12.03.1991
(51) Int. Cl.: B23K 26/00

(54) **Verfahren und Vorrichtung zum kontinuierlichen Verschweissen von auf Stoss geführten Bändern mittels eines Laserstrahls**
Process and device for continuous welding of butt guided bands using a laserbeam
Procédé et dispositif pour souder en continu des bandes guidées bout-à-bout au moyen d'un faisceau laser

(30) Priorität: 29.03.1990 DE 4010077
(43) Veröffentlichungstag der Anmeldung: 09.10.1991
(73) Patentinhaber: Thyssen Stahl Aktiengesellschaft, 47166 Duisburg (DE)
(72) Erfinder: Prange, Wilfried, W-4220 Dinslaken (DE); Sturm, Joseph, W-4100 Duisburg 18 (DE); Schachheim, Hans, W-4224 Hünxe (DE); Schmitz, Heinrich, W-4220 Dinslaken (DE); Zeimes, Manfred, W-4010 Hilden (DE)
(74) Vertreter: Cohausz & Florack Patentanwälte

(56) Entgegenhaltungen:
- EP-A- 0 215 404
- EP-A- 0 299 358
- EP-A- 0 313 896

## Beschreibung

Die Erfindung bezieht sich auf ein Verfahren zum kontinuierlichen Verschweißen von auf Stoß geführten Bändern (Blechen) ohne Zusatzwerkstoff mittels eines Laserstrahls.

Die Erfindung bezieht sich ferner auf eine Vorrichtung zum kontinuerlichen Verschweißen von auf Stoß geführten Bändern (Blechen) an deren Stoßkanten mittels eines ortsfesten Laser strahls mit auf beiden Seiten der zu verschweißenden Bänder paarweise senkrecht zu deren Laufrichtung angeordneten Spannrollen, die im Bereich des Stoßes der Bänder einen Spalt bilden, durch den der ortsfeste Laserstrahl auf die zu verschweißenden Bandkanten trifft, und mit einer in Bandlaufrichtung unmittelbar von dem Schweißfokus angeordneten Meßeinrichtung für die den Istwert bildende Breite des von den Stoßkanten der Bänder gebildeten Spaltes.

Ein solches Verfahren und eine solche Vorrichtung sind bekannt (DE 3723611A1). Um Bänder ohne Zusatzmaterial mittels eines Laserstral verschweißen zu können, ist es erforderlich, die Stoßkanten der Bänder möglichst eng zusammenzubringen, so daß unter Berücksichtugung der nicht zu vermeidenden Welligkeit in den Stoßkanten sich maximal eine Spaltweite von (0,1) mm ergibt.

Sofern die Spaltweite größer ist, reicht das von den Stoßkanten zur Verfügung gestellte Material nicht aus, um den Spalt beim Schweißen ohne Zusatzmaterial aufzufüllen.

In der Praxis hat sich jedoch gezeigt, daß es schwierig ist, den Spalt der Stoßkanten der Bänder so klein zu halten. Es wurde gefunden, daß ursächlich für diese Schwierigkeit die beim Schweißen entstehenden Wärmespannungen in den Bändern sind. Diese Wärmespannungen führen dazu, daß trotz der Einspannung der Bänder zwischen den Rollen der Spalt breiter werden kann.

Der Erfindung liegt die Aufgabe zugrunde, ein Verfahren und eine Vorrichtung der eingangs genannten Art zu schaffen, bei dem beziehungsweise bei der der Spalt zwischen den Stoßkanten der miteinander zu verschweißenden Bänder beim kontinuierlichen Verschweißen auf einer solchen kleinen Breite gehalten werden kann, bei der noch kein Zusatzmaterial zum Auffüllen des Spaltes benötigt wird.

Diese Aufgabe wird bei einem Verfahren der eingangs genannten Art dadurch gelöst, daß die Bänder im Bereich der Schweißnaht in die Bandlaufrichtung unmittelbar hinter dem Schweißfokus gekühlt werden, wobei die Kühlintensität in Abhängigkeit von der Breite des von den Stoßkanten der Bänder gebildeten, in Bandlaufrichtung unmittelbar vor dem Schweißfokus liegenden Spaltes derart geregelt wird, daß die Breite innerhalb vorgegebener Toleranzwerte bleibt.

Bei einer Vorrichtung der eingangs genannten Art wird die Aufgabe durch eine Regeleinrichtung gelöst, die die Meßeinrichtung für die den Istwert bildende Breite des von den Stoßkannten der Bänder gebildeten Spaltes und eine in Bandlaufrichtung hinter dem Schweißfokus angeordnete, auf die Bänder im Bereich der Schweißnaht als Stellglied einwirkenden Kühleinrichtung umfaßt, deren Kühlintensität in Abhängigkeit von dem von der Meßeinrichtung gelieferten Istwert für die Spaltbreite im Sinne einer innerhalb vorgegebener Toleranzwerte liegenden konstanten Spaltbreite eingestellt wird.

Bei der Erfindung wird durch die geregelte Kühlintensität der Bänder im geschweißten Bereich verhindert, daß die Stoßkanten vor dem Schweißfokus wegen starker Wärmespannungen in Folge hoher Temperaturen im geschweißten Bereich auseinanderlaufen oder wegen zu starker Kühlung im geschweißten Bereich einander überklettern. Die geregelte Kühlintänsität führt deshalb im Ergebniss dazu, daß die Spaltbreite innerhalb der für eine zusatzmaterialfreie Verschweißung der Stoßkanten für zulässige Toleranz bleibt.

Nach einer Ausgestaltung des erfindungsgemäßen Verfahrens ist es zweckmäßig, die Kühlung auf beiden Seiten der Bänder durchzuführen. Als Kühlmittel eignet sich ein gasförmiges Medium, insbesondere Luft. Damit dieses aufgeblasene gasförmige Medium das über dem Schweißfokus liegende Plasma nicht negativ beeinflußt, ist nach einer weiteren Ausgestaltung der Erindung vorgesehen, die Strahlrichtung des aufgeblasenen gasförmigen Mediums von dem Schweißfokus wegzurichten. Gute Ergebnisse hinsichtlich der Regelung der Kühlintensität eines gasförmigen Mediums wurden über die Steuerung der Strömungsgeschwindigkeit des Mediums erreicht.

Nach einer ersten Ausgestaltung der Vorrichtung besteht die Meßeinrichtung aus einem auf der einen Bandseite angeordneten Strahler und einem auf der anderen Bandseite angeordneten Strahlungsempfänger. Als Strahler eignet sich ein Laser und als Strahlungsempfänger eine Diodenzeilenkamera.

Wenn die Kühleinrichtung Blasdüsen für ein gasförmiges Kühlmedium aufweist, sollte deren Blasrichtung in der unmittelbaren Nähe des Schweißfokus von dem Schweißfokus weggerichtet sein.

Um möglichst nah an den Schweißfokus heranzukommen, können die Blasdüsen mit einem schmalen Schnabel bis in den Spalt zwischen den Spannrollen hineinragen. Außerhalb des Spaltes ist es zweckmäßig, die Bänder großflächiger zu kühlen. Deshalb können hier die Blasdüsen als plattenförmige Elemente ausgebildet sein. Um eine große Kühlintensität zu erreichen, hat es sich als zweckmäßig erwiesen, wenn die plattenförmigen Elemente zu beiden Seiten hin abfallende Flanken aufweißen. Dies erleichtert das Abströmen des aufgeblasenen Kühlmediums.

Im folgenden wird die Erfindung anhand einer Zeichnung näher erläutert. Im einzelnen zeigen
- Figur 1: eine Vorrichtung zum kontinuierlichen Verschweißen von Bändern in schematischer Darstellung.
- Figur 2: eine Vorrichtung zum Verschweißen von Bändern in schematischer Darstellung in Seitenansicht.
- Figur 3: die Vorrichtung gemäß Figur 2 in vergrößerter Darstellung im Ausschnitt.

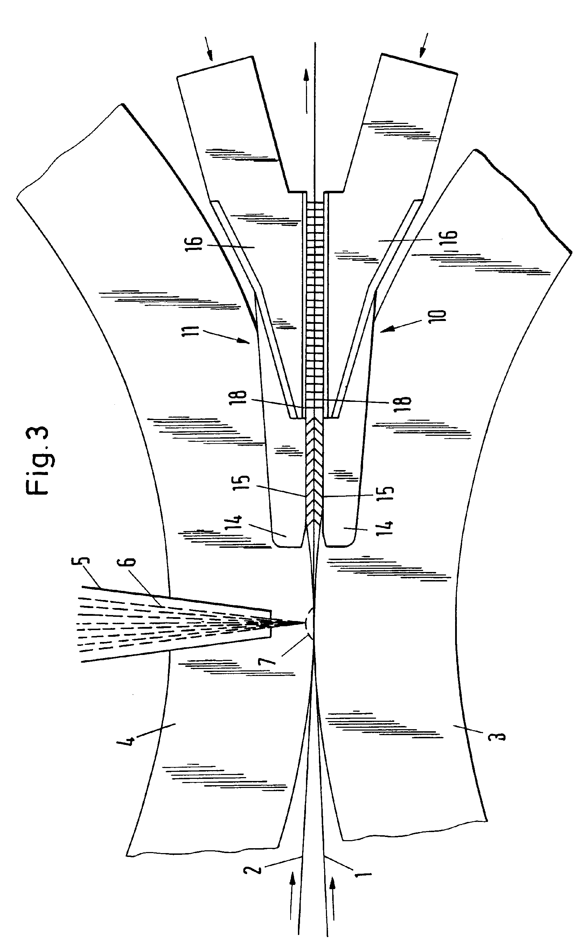

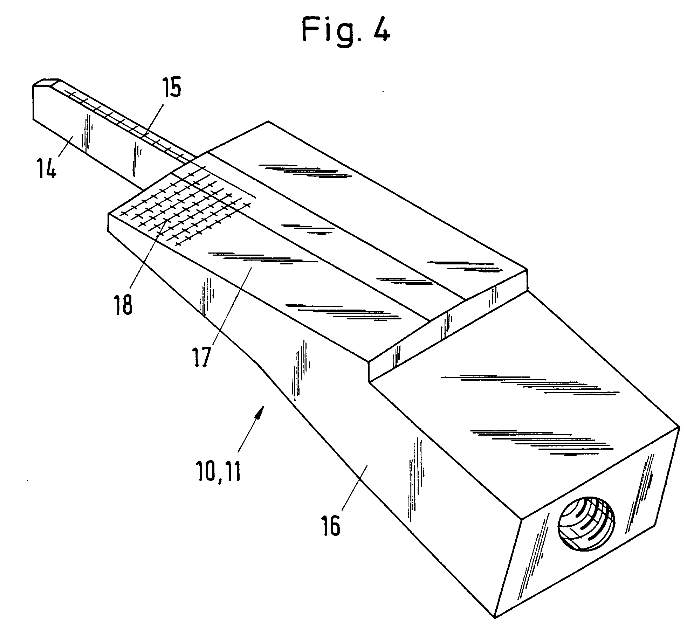

Figur 4 eine Blasdüse der Kühleinrichtung der Vorrichtung gemäß Figur 3 in isometrischer Darstellung Für die erfindungsgemäße Vorrichtung zum Verschweißen von auf Stoß geführten Bändern kann eine Vorrichtung eingesetzt werden, wie sie aus der DE3723611A1 bekannt ist. Diese Vorrichtung weist für jedes der beiden miteinander zu verschweißenden Bänder 1,2 jeweils ein Paar Spannrollen 3,4 auf, die zwischen sich das Band 1,2 einklemmen und die benachbarten Bänder mit möglichst kleinem Abstand der Stoßkannten in einer Ebene der Schweißstelle zuführen. Die benachbarten unteren und oberen Spannrollen 3,4 sind mit geringem Abstand voneinander angeordnet. In dem Spalt der oberen Spannrollen 4 ist eine Schutzgas führende Düse 5 angeordnet, durch die ein fokusierter Laserstrahl 6 auf die Stoßkanten der Bänder 1,2 gerichtet ist. Über dem Schweißfokus des Laserstrahls 6 bildet sich ein linsenförmiges Plasma 7 aus innerhalb dem so hohe Temperaturen herrschen, daß die Stoßkanten der Bänder 1,2 unter Auffüllung des verbliebenen Spaltes sich miteinander verschweißen.

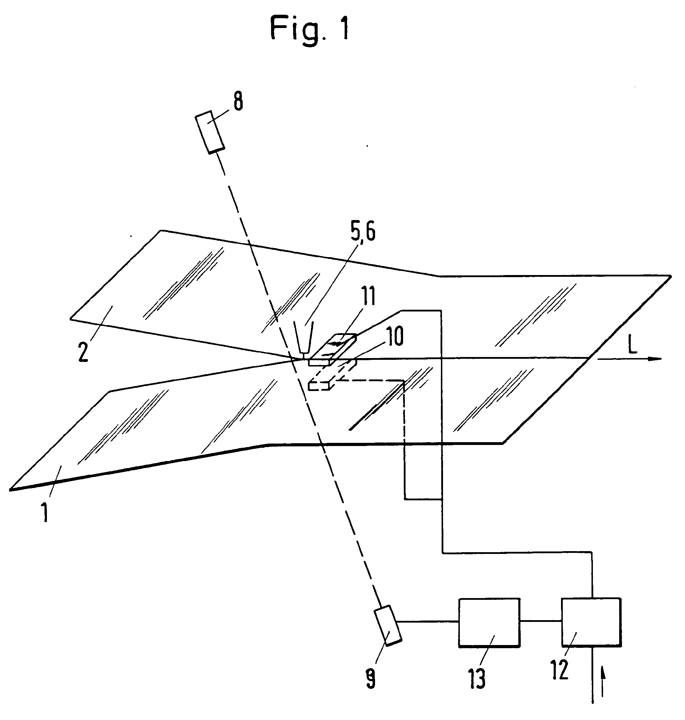

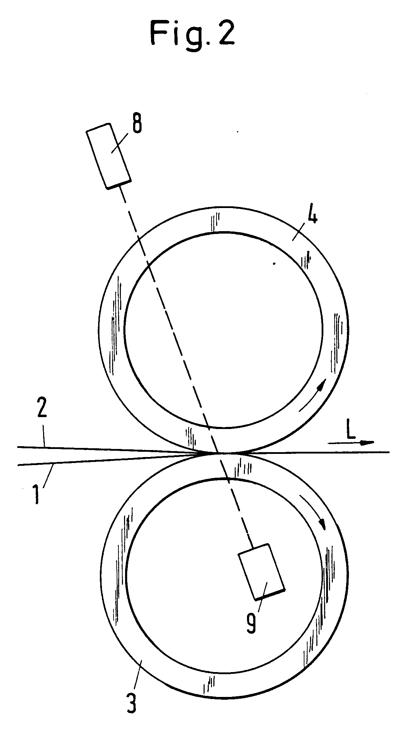

Wie in Figur 1 und 2 dargestellt, ist in Laufrichtung L der Bänder 1,2 eine Meßeinrichtung für die Weite des von den Stoßkanten der Bänder 1,2 gebildeten Spaltes angeordnet. Diese Meßeinrichtung besteht aus einem als Laser ausgebildeten Strahler 8 auf der einen Seite der Bänder 1,2 und einem auf der anderen Seite der Bänder 1,2 angeordneten Empfänger 9 in Form einer Diodenzeilenkamera. Während der Strahler 8 außerhalb der Spannrollen 4 angeordnet ist und sein Strahl durch die mit Abstand voneinander angeordneten oberen Spannrollen 4 gerichtet ist, ist der Strahlungsempfänger 9 innerhalb der hohl ausgebildeten unteren Spannrollen 3 untergebracht. Der Abstand der Meßstelle von dem Schweißfokus beträgt weniger als ein Zentimeter.

In Laufrichtung L der Bänder 1,2 hinter dem Laserstrahl 6 sind oberhalb und unterhalb der Bänder 1,2 als Blasdüsen ausgebildete Kühleinrichtungen 10,11 für ein gasförmiges Kühlmedium, insbesondere Kühlluft angeordnet . Diesen Blasdüsen 10, 11 wird aus einer nicht dargestellten Druckmittelquelle Luft über ein Ventil 12 zugeleitet, das von einem Rechner 13 angesteuert wird .

In Abhängigkeit von dem Istwert der Spaltbreite, der von der Meßeinrichtung 8,9 geliefert wird, ermittelt der Rechner 13 die Soll-Istwert-Abweichung und steuert entsprechend dieser Abweichung das Ventil 12 an, so daß durch mehr oder weniger Kühlluft zu den Düsen 10,11 die Kühlintensität an den Bändern 1,2 derart geregelt wird, daß die Spaltbreite innerhalb vorgegebener Toleranzwerte bleibt.

Die schematisch in Figur 1 dargestellten Blasdüsen 10,11 haben vorzugsweise die in Figur 4 dargestellte Form. Sie bestehen aus einem Schnabel 14 mit oberseitig angeordneten Düsenlöchern 15 und einem sich an den Schnabel 14 anschließenden Hohlkörper 16 mit einer oberseitig angeordneten zu beiden Seiten hin abfallenden Platte 17, in der ebenfalls Düsenlöcher 18 vorgesehen sind. Wie Figur 3 zeigt, ragt diese Blasdüse mit ihrem Schnabel 14 weit in den Spalt zwischen den benachbarten Spannrollen 3,4 hinein, während der Hohlkörper 16 sich außerhalb des Spaltes befindet. In Figur 3 ist auch die Strahlrichtung der Blasstrahlen angedeutet, die aus den Düsenlöchern 15,18 gegen die ineinander verschweißten Bänder 1,2 gerichtet sind. Während die Blasstrahlen im Bereich des Schnabels 14 schräg gegen die Bänder 1,2 mit von der Schweißstelle weggerichteter Blasrichtung gerichtet sind, sind sie im Bereich des Hohlkörpers 16 senkrecht auf die Bänder 1,2 gerichtet.

Es versteht sich, daß das Verfahren und die Vorrichtung nicht auf das Verschweißen von langgestrecktem Flachmaterial, wie Bändern, beschränkt ist sondern auch das Verschweißen von Blechen umfaßt.

## Patentansprüche

1. Verfahren zum kontinuierlichen Verschweißen von auf Stoß geführten Bändern oder Blechen (1,2) ohne Zusatzwerkstoff mittels eines Laserstrahls(6), **dadurch gekennzeichnet,** daß die Bänder (1,2) im Bereich der Schweißnaht in Bandlaufrichtung (L) unmittelbar hinter dem Schweißfokus gekühlt werden, wobei die Kühlintensität in Abhängigkeit von der Breite des von den Stoßkanten der Bänder (1,2) in Bandlaufrichtung (L) unmittelbar vor dem Schweißfokus gebildeten Spaltes derart geregelt wird, daß dessen Breite innerhalb vorgegebener Toleranzwerte bleibt.

2. Verfahren nach Anspruch 1, **dadurch gekennzeichnet,** daß die Kühlung auf beiden Seiten der Bänder (1,2) erfolgt.

3. Verfahren nach Anspruch (1) oder (2), **dadurch gekennzeichnet,** daß als Kühlmittel ein gasförmiges Medium, insbesondere Luft, verwendet wird.

4. Verfahren nach einem der Ansprüche (1-3), **dadurch gekennzeichnet,** daß die Strahlrichtung des aufgeblasenen gasförmigen Mediums von dem Schweißfokus weggerichtet ist.

5. Verfahren nach Anspruch (3) oder (4), **dadurch gekennzeichnet,** daß die Regelung der Kühlintensität des aufgeblasenen gasförmigen Mediums über deren Strömungsgeschwindigkeit erfolgt.

6. Vorrichtung zum kontinuierlichen Verschweißen von auf Stoß geführten Bändern oder Blechen (1,2) an deren Stoßkanten mittels eines ortsfesten Laserstrahls (6), mit an beiden Seiten der zur verschweißenden Bänder (1,2) paarweise senkrecht zu deren Laufrichtung (L) angeordneten Spannrollen (3,4), die im Bereich des Stoßes der Bänder (1,2) einen Spalt bilden, durch den der ortsfeste Laserstrahl (6) auf die zu verschweißenden Stoßkanten trifft, und mit einer in Bandlaufrichtung (L) unmittelbar vor dem Schweißfokus angeordneten Meßeinrichtung (8,9) für die den Istwert bildende Breite des von den Stoßkanten der Bänder (1,2) gebildeten Spaltes, gekennzeichnet durch eine Regleleinrichtung (12,13) die die genannte Meßeinrichtung und eine in Bandlaufrichtung (L) hinter dem Schweißfokus angeordneten und auf die Bänder (1,2) im Bereich der Schweißnaht einwirkenden Kühleinrichtung (10, 11) umfaßt, deren Kühlintensität in Abhängigkeit von dem von der Meßeinrichtung (8,9) gelieferten Istwert für die Spaltbreite im Sinne einer innerhalb vorgegebener Toleranzwerte liegenden konstanten Spaltbreite eingestellt wird.

7. Vorrichtung nach Anspruch (6), **dadurch gekennzeichnet,** daß die Meßeinrichtung (8,9) aus einem auf der einen Bandseite angeordneten Strahler (8) und einem auf der anderen Bandseite angeordneten Strahlungsempfänger (9) besteht.

8. Vorrichtung nach Anspruch (7), **dadurch gekennzeichnet,** daß der Strahler (8) ein Laser ist.

9. Vorrichtung nach Anspruch (7) oder (8), **dadurch gekennzeichnet,** daß der Strahlungsempfänger (9) eine Diodenzeilenkamera ist.

10. Vorrichtung nach einem der Ansprüche (6-9), **dadurch gekennzeichnet,** daß die Kühleinrichtung (10,11) auf beiden Bandseiten angeordnet ist.

11. Vorrichtung nach Anspruch (10), **dadurch gekennzeichnet,** daß die Kühleinrichtung (10,11) Blasdüsen für ein gasförmiges Medium aufweist.

12. Vorrichtung nach Anspruch (11), **dadurch gekennzeichnet,** daß die Blasrichtung der Blasdüsen (10, 11) in der unmittelbaren Nähe des Schweißfokus eine von dem Schweißfokus weggerichtete Strahlungskomponente hat.

13. Vorrichtung nach Anspruch (11) oder (12), **dadurch gekennzeichnet,** daß die Blasdüsen (10, 11) mit einem schmalen Schnabel (14) bis in den Spalt zwischen den Spannrollen (3,4) hineinragen.

14. Vorrichtung nach einem der Ansprüche (11-13), **dadurch gekennzeichnet,** daß die Blasdüsen (10, 11) außerhalb des Spaltes der Spannrollen (3,4) als plattenförmige Elemente (16-18) ausgebildet sind.

15. Vorrichtung nach Anspruch (14), **dadurch gekennzeichnet,** daß die plattenförmigen Elemente (15-18) zu beiden Seiten hin abfallende Flanken aufweisen.

## Claims

1. A process for the continuous welding of strips or sheets (1,2) guided in abutment without filler by means of a laser beam (6), characterized in that the strips (1,2) are cooled in the zone of the weld immediately downstream of the welding focus in the direction (L) in which the strip runs, the cooling intensity being so controlled, in dependence on the width of the gap formed by the joint edges of the strips (1,2) immediately upstream of the welding focus, referred to the direction (L), that its width remains within given tolerance values.

2. A process according to claim 1, characterized in that cooling is performed on both sides of the strips (1,2).

3. A process according to claims 1 or 2, characterized in that the cooling medium used Is a gaseous medium, more particularly air.

4. A process according to one of claims 1-3, characterized in that the jet of blown-on gaseous medium is directed away from the welding focus.

5. A process according to claims 3 or 4, characterized in that the cooling intensity of the blown-on gaseous medium is controlled via its flow velocity.

6. An apparatus for the continuous welding of strips or sheets (1,2) guided in abutment at their joint-edges by means of a fixed laser beam (6), the apparatus having on both sides of the strips (1,2) to be welded clamping rollers (3,4) which are disclosed in pairs perpendicularly to the direction (L) in which the strip runs and which form in the zone where the strips (1,2) abut a gap through which the fixed laser beam (6) impinges on the joint edges to be welded, having a measuring device (8,9), disposed immediately upstream of the welding process in the direction (L) in which the strip runs, or the width, forming the actual value, of the gap formed by the joint edges of the strips (1,2), characterized by a control device (12,13) including the said measuring device (8,9), and a cooling device (10,11) which is disposed downstream of the welding focus in said direction (L) and which acts on the strips (1,2) in the zone of the weld and whose cooling intensity Is adjusted, in dependence on the actual gap width delivered by the measuring device (8,9), to obtain a constant gap width lying within given tolerance values.

7. An apparatus according to claim 6, characterized in that the measuring device (8,9) comprises an emitter (8) disposed on one side of the strip and a radiation receiver (9) disposed on the other side of the strip.

8. An apparatus according to claim 7, characterized in that the emitter (8) is a laser.

9. An apparatus according to claims 6 or 7, characterized in that the radiation receiver (9) is a diode line camera.

10. An apparatus according to one of claims 6-9, characterized in that the cooling device (10, 11) is disposed on both sides of the strip.

11. An apparatus according to claim 10, characterized in that the cooling device (10, 11) has blowing nozzles for a gaseous medium.

12. An apparatus according to claim 11, characterized in that the blowing direction of the blowing nozzles (10, 11) has immediately adjacent the welding focus a jet component directed away from the welding focus.

13. An apparatus according to claims 11 or 12, characterized in that the blowing nozzles (10, 11) project by a narrow nose (14) into the gap between the clamping rollers (3, 4).

14. An apparatus according to one of claims 11-13, characterized in that outside the gap between the clamping rollers (3, 4), the blowing nozzles (10, 11) take the form of plate-shaped elements (16-18).

15. An apparatus according to claim 14, characterized in that the plate-shaped elements (16-18) have flanks which are inclined to both sides.

## Revendications

1. Procédé pour souder en continu sans métal d'apport, au moyen d'un laser (6), des feuillards ou tôles (1, 2) guidés par poussée,
caractérisé en ce que les feuillards (1, 2) sont refroidis dans la région du cordon de soudure immédiatement derrière le foyer de soudage dans la direction de déplacement (L) des feuillards, l'intensité de refroidissement étant réglée en fonction de la largeur de la fente formée par les bords de poussée des feuillards (1, 2) se trouvant immédiatement avant le foyer de soudage dans la direction de déplacement (L) des feuillards, de telle manière que la largeur reste à l'intérieur de valeurs de tolérance pré-établies.

2. Procédé selon la revendication 1,
caractérisé en ce qu'on effectue le refroidissement des deux côtés des feuillards (1, 2).

3. Procédé selon la revendication 1 ou 2,
caractérisé en ce qu'on utilise comme agent de refroidissement un agent gazeux, en particulier de l'air.

4. Procédé selon l'une des revendications 1-3,
caractérisé en ce que la direction de flux de l'agent gazeux soufflé est dirigée à l'opposé du foyer de soudage.

5. Procédé selon la revendication 3 ou 4,
caractérisé en ce que la régulation de l'intensité de refroidissement de l'agent gazeux soufflé est régulée par sa vitesse d'écoulement.

6. Dispositif pour souder en continu sur leurs bords de poussée des feuillards ou tôles (1, 2) guidés par poussée, au moyen d'un laser (6) fixe, avec des tambours de tension (3, 4) disposés par paires des deux côtés des feuillards (1, 2) à souder, orthogonalement à leur direction de déplacement (L) qui forment dans la région de la poussée des feuillards (1, 2) une fente à travers laquelle le laser (6) fixe frappe les bords de poussée à souder et avec un dispositif de mesure (8, 9) disposé immédiatement avant le foyer de soudage, dans la direction de déplacement (L) des feuillards, pour la largeur de la fente formée par les bords de poussée des feuillards (1, 2), qui constitue la valeur effective,
caractérisé par un dispositif de réglage (12, 13) qui comprend ledit dispositif de mesure et un dispositif de refroidissement (10, 11) disposé derrière le foyer de soudage dans la direction de déplacement (L) des feuillards, et agissant sur les feuillards (1, 2) dans la région du cordon de soudure dont l'intensité de refroidissement est réglée, en fonction de la valeur effective de la largeur de fente délivrée par le dispositif de mesure (8, 9), dans le sens d'une largeur de fente se trouvant constante à l'intérieur de valeurs de tolérance pré-établies.

7. Dispositif selon la revendication 6,
caractérisé en ce que le dispositif de mesure (8, 9) est constitué par un émetteur de rayonnement (8) disposé sur l'un des côtés des feuillards et un récepteur de rayonnement (9) disposé sur l'autre côté des feuillards.

8. Dispositif selon la revendication 7,
caractérisé en ce que l'émetteur de rayonnement (8) est un laser.

9. Dispositif selon la revendication 7 ou 8,
caractérisé en ce que le récepteur de rayonnement (9) est une caméra à balayage horizontal à diodes.

10. Dispositif selon l'une des revendications 6-9,
caractérisé en ce que le dispositif de refroidissement (10, 11) est disposé des deux côtés des feuillards.

11. Dispositif selon la revendication 10,
caractérisé en ce que le dispositif de refroidissement (10, 11) présente des buses de soufflage pour un agent gazeux.

12. Dispositif selon la revendication 11,
caractérisé en ce que la direction de soufflage des buses de soufflage (10, 11) a, au voisinage immédiat du foyer de soudage, une composante de flux dirigée à l'opposé du foyer de soudage.

13. Dispositif selon la revendication 11 ou 12,
caractérisé en ce que les buses de soufflage (10, 11) font saillie par un bec étroit (14) jusque à l'intérieur de la fente entre les tambours de tension (3, 4).

14. Dispositif selon l'une des revendications 11-13,
caractérisé en ce que les buses de soufflage (10, 11) sont réalisées à l'extérieur de la fente des tambours de tension (3, 4) sous forme d'éléments (16-18) en forme de plaques.

15. Dispositif selon la revendication 14,
caractérisé en ce que les éléments (15-18) en forme de plaques présentent des flancs retombant des deux côtés.
